# EUROPÄISCHE PATENTANMELDUNG

(11) **EP 3 091 242 A1**
(43) Veröffentlichungstag der Anmeldung: **09.11.2016**
(21) Anmeldenummer: 15166940.5
(22) Anmeldetag: 08.05.2015
(51) Int. Cl.: F16C 33/10, F16C 17/02, F16C 17/04

(54) **GLEITLAGER MIT SCHMIERNUT**

(71) Anmelder: Siemens Aktiengesellschaft, 80333 München (DE)
(72) Erfinder: Meyer, Thomas, 52223 Stolberg (DE)

(57) **Zusammenfassung**

Die Erfindung betrifft ein Gleitlager 1 mit einem Lagerkörper 2, an dem eine Gleitfläche 3 ausgebildet ist, in der wenigstens eine Schmiertasche 4 zum Verteilen von Schmierstoff auf der Gleitfläche 3 vorgesehen ist, wobei insbesondere jeder Schmiertasche 4 ein Schmierstoffzuführkanal 9 zugeordnet ist, der den Lagerkörper 2 durchsetzt und dazu ausgebildet ist, der Schmiertasche 4 Schmierstoff zuzuführen, wobei der wenigstens einen Schmiertasche 4 wenigstens eine Schmiernut 5 zugeordnet ist, die in der Gleitfläche 3 ausgebildet ist und sich von einem Rand 6 der Gleitfläche 3 bis zu der zugeordneten Schmiertasche 4 erstreckt.

## Beschreibung

Die Erfindung betrifft ein Gleitlager mit einem Lagerkörper, an dem eine Gleitfläche ausgebildet ist, in der wenigstens eine Schmiertasche zum Verteilen von Schmierstoff auf der Gleitfläche vorgesehen ist, wobei insbesondere jeder Schmiertasche ein Schmierstoffzuführkanal zugeordnet ist, der den Lagerkörper durchsetzt und dazu ausgebildet ist, der Schmiertasche Schmierstoff zuzuführen.

Derartige Gleitlager sind im Stand der Technik in unterschiedlichsten Ausgestaltungen bekannt und dienen insbesondere zum Führen bewegbarer Maschinenteile. Ein Gleitlager umfasst eine Gleitfläche, die an einem Lagerkörper des Gleitlagers derart ausgebildet ist, dass sie mit dem bewegbaren Maschinenteil während dessen Bewegung dauerhaft in unmittelbarem Kontakt steht. Je nach der Bewegung des Maschinenteils in dem Gleitlager lassen sich Lineargleitlager und Rotationsgleitlager unterscheiden, wobei letztere abhängig von der Richtung der Führungskraft als Radialgleitlager und Axialgleitlager ausgestaltet sein können.

Bei der Bewegung des Maschinenteils entlang der Gleitfläche tritt unvermeidlich Gleitreibung auf, die der Bewegung des Maschinenteils einen Widerstand entgegensetzt. Dessen Überwindung erfordert Energie, die in Wärme umgewandelt wird, wodurch sich das Gleitlager und das Maschinenteil erhitzen. Zudem wird durch die Gleitreibung Oberflächenmaterial von der Gleitfläche und dem Maschinenteil abgetragen. Durch diesen Materialabtrag verschleißen das Gleitlager und das Maschinenteil bei fortgesetztem Betrieb allmählich.

Erhitzung und Verschleiß lassen sich allerdings reduzieren, wenn reibungsarme Materialien für die Gleitfläche und/oder das Maschinenteil verwendet werden, und/oder in den Zwischenraum zwischen der Gleitfläche und dem Maschinenteil ein flüssiger Schmierstoff eingebracht wird, der einen Flüssigkeitsfilm zwischen der Gleitfläche und dem Maschinenteil erzeugt. Geschmierte Gleitlager lassen sich in hydrostatische und hydrodynamische Gleitlager unterteilen.

Hydrostatische Gleitlager benötigen bereits zum Anlaufen einen vollständigen Schmierfilm zwischen der Gleitfläche und dem Maschinenteil, der durch eine Pumpe realisiert wird. Zwar sind hydrostatische Gleitlager frei von Anlaufreibung und äußerst verschleißarm. Jedoch erfordern sie aufwändige Konstruktionen, insbesondere der Schmierstoffzuführung, sowie spezielle drucktolerante Schmierstoffe wie beispielsweise Hochdrucköl. Hydrodynamische Gleitlager dagegen bauen den erforderlichen Schmierfilm zwischen der Gleitfläche und dem Maschinenteil erst durch die Bewegung des Maschinenteils selbst auf.

Wenn sich beispielsweise eine Welle exzentrisch in einem hydrodynamischen Radialgleitlager dreht, erzeugt sie durch den sich verengenden keilförmigen axialen Querschnitt des Zwischenraums zwischen der Welle und der Gleitfläche eine Schubspannung im Schmierstoff. Dadurch entsteht im Schmierstoff eine hydrodynamische Druckverteilung, die wiederum auf die Welle eine Kraft ausübt. Ist die Gegenkraft zu der von außen wirkenden Lagerkraft (Gewichtskraft der Welle) groß genug, trennt sich die Welle durch Aufschwimmen auf dem Schmiermittel von der Gleitfläche. Daher müssen hydrodynamische Gleitlager eine mindeste Anfahrdrehzahl erreichen, um einen ausreichenden Schmierfilm zu bilden.

Bei einem hydrodynamischen Radialgleitlager lassen sich demnach insgesamt vier Betriebsbereiche unterscheiden. Im Stillstand bzw. während des Anfahrens mit niedriger Drehzahl der Welle berühren sich die Welle und die Gleitfläche des Gleitlagers. Mit zunehmender Drehzahl der Welle wird der Schmierfilm tragfähiger und das Gleitlager geht in einen Übergangsbereich über, in welchem eine Mischung aus Trockenreibung und Flüssigkeitsreibung (sogenannte Mischreibung) vorherrscht. Oberhalb einer bestimmten Drehzahl der Welle liegt der volltragende Bereich des Gleitlagers, in dem es nur noch Flüssigkeitsreibung und somit geringen Verschleiß gibt.

Die Versorgung eines Gleitlagers mit Schmierstoff erfolgt in bekannter Weise durch einen Schmierstoffzuführkanal, der als Bohrung in dem Lagerkörper des Gleitlagers ausgeformt sein kann und diesen durchsetzt. Um eine bessere Verteilung des Schmierstoffes auf der Gleitfläche des Gleitlagers zu bewirken, ist eine Schmiertasche in Form einer Ausnehmung in der Gleitfläche vorgesehen, in welche der Schmierstoffzuführkanal mündet. Dabei erstreckt sich die Schmiertasche vorteilhaft quer zu der Bewegungsrichtung des Maschinenteils, um einen möglichst breiten Schmierfilm an der Gleitfläche aufzubauen.

Radialgleitlager werden aufgrund ihrer vorteilhaften Eigenschaften unter anderem in Übersetzungsgetrieben verbaut. Dabei übersetzen diese Getriebe die Drehzahl einer Antriebswelle in eine höhere Drehzahl einer Abtriebswelle.

Derartige Übersetzungsgetriebe werden beispielsweise in Windkraftanlagen verwendet, um die relativ geringe Rotordrehzahl in eine deutlich höhere Generatordrehzahl zu übersetzen. Derartige Windkraftgetriebe sind üblicherweise mehrstufig aufgebaut, um das erforderliche Übersetzungsverhältnis zu erreichen.

Gleitlager in Übersetzungsgetrieben von Windkraftanlagen weisen aufgrund der windabhängig sehr variablen Drehzahlen einen gewissen Anteil von Mischreibung auf. Ein daraus möglicherweise resultierender Verschleiß kann infolge von Wartung, Reinigung und/oder Instandsetzung der Gleitlager zu entsprechenden Stillstandzeiten der Windkraftanlagen führen.

Gerade in den Randbereichen der Gleitfläche kann der Schmierfilm abreißen, wodurch es zu erhöhtem Verschleiß in den Randbereichen der Gleitfläche kommt. Zudem besteht die Gefahr, dass sich Materialabtrag aus dem Zwischenraum in den Schmiertaschen sammelt und diese allmählich zusetzt, wodurch ein ausreichendes Zuführen von Schmierstoff behindert wird.

Ausgehend von diesem Stand der Technik ist es eine Aufgabe der vorliegenden Erfindung, ein verschleißarmes Gleitlager zu schaffen.

Die erfindungsgemäße Aufgabe ist durch ein Gleitlager der eingangs genannten Art gelöst, bei dem der wenigstens einen Schmiertasche wenigstens eine Schmiernut zugeordnet ist, die in der Gleitfläche ausgebildet ist und sich von einem Rand der Gleitfläche bis zu der zugeordneten Schmiertasche erstreckt.

Der Erfindung liegt somit die Idee zugrunde, dass sich ein möglichst breiter Schmierfilm auf der Gleitfläche mittels Schmiernuten, die sich von einem Rand der Gleitfläche bis zu einer zugeordneten Schmiertasche erstrecken, besser aufbauen lässt. Auf diese Weise wird sichergestellt, dass es gerade in den Randbereichen der Gleitfläche nicht zu einem Abriss des Schmierfilms kommt. Zudem kann reibungsbedingter Materialabtrag aus der Schmiertasche durch die Schmiernut nach außen abgeführt werden, so dass Materialabtrag die Schmiertasche nicht zusetzen kann.

In Weiterbildung der Erfindung weist die wenigstens eine Schmiernut eine Tiefe von weniger als 50%, insbesondere von weniger als 30% und bevorzugt von weniger als 20% der maximalen Tiefe der zugeordneten Schmiertasche auf. Vorteilhaft weist die wenigstens eine Schmiernut eine Breite von weniger als 50%, insbesondere von weniger als 30% und bevorzugt von weniger als 20% der maximalen Breite der zugeordneten Schmiertasche auf. Insbesondere kann die wenigstens eine Schmiernut an dem Rand der Gleitfläche eine Randöffnung bilden, die eine Querschnittsfläche von wenigstens 0,2 mm² und bevorzugt von wenigstens 0,25 mm² aufweist. Diese gegenüber der zugeordneten Schmiertasche geringen Abmessungen verhindern, dass zu viel Schmierstoff das Gleitlager durch die Schmiernut verlässt. Zudem lassen sich solche Schmiernuten mit nur geringem Aufwand auch nachträglich in die Gleitfläche eines vorhandenen Gleitlagers einbringen und mindern die Abstützwirkung des Gleitlagers infolge der kaum verringerten Gleitfläche nur unwesentlich. Bei geeigneter Schmiernutabmessung wird gewährleistet, dass die Schmiernut einerseits genügend Schmierstoff auch an den Rand der Gleitfläche transportiert wird. Andererseits werden reibungsbedingter Materialabtrag und/oder mit dem Schmierstoff zugeführte Partikel, die sich im Betrieb des Gleitlagers in der Schmiertasche sammeln, aus dieser durch die Schmiernut nach außen abgeführt.

In einer weiteren Ausgestaltung erstreckt sich jede Schmiernut von einem Rand der Gleitfläche zu einem dem Rand der Gleitfläche zugewandten Rand der zugeordneten Schmiertasche. Vorteilhaft erstreckt sich jede Schmiernut dabei entlang einer kürzesten Verbindung von einem Rand der Gleitfläche zu einem dem Rand der Gleitfläche zugewandten Rand der zugeordneten Schmiertasche. Bei Schmiertaschen, die sich ohnehin beinahe bis zu einem Rand der Gleitfläche erstrecken, lassen sich solche Schmiernuten besonders einfach herstellen.

Vorteilhaft mündet jede Schmiernut mittig in die zugeordnete Schmiertasche. Gleitlager mit mittig in Schmiertaschen mündenden Schmiernuten zeichnen keine bevorzugte Gleitrichtung aus und arbeiten in beiden entgegengesetzten Gleitrichtungen gleich effektiv.

Gemäß einer Variante der vorliegenden Erfindung ist das Gleitlager als Radialgleitlager ausgebildet, wobei der Lagerkörper ring- oder ringsegmentförmig ausgebildet ist und die Gleitfläche an einer radial inneren und/oder einer radial äußeren Umfangsfläche des Lagerkörpers ausgebildet ist. Derartig ausgestaltete Gleitlager eignen sich für die Lagerung drehbarer Maschinenteile wie Wellen oder Zahnräder, wobei die Gleitflächen jeweils innen oder außen am Lagerkörper vorgesehen sind.

Jede Schmiertasche eines Radialgleitlagers kann eine längliche, insbesondere rechteckige Form besitzen, wobei sich die Längsrichtung in der Axialrichtung erstreckt. Länglich geformte Schmiertaschen, die sich in der Axialrichtung also quer zu der Drehrichtung erstrecken, können den Schmierstoff gut auf der Gleitfläche des Radialgleitlagers verteilen.

Wenn zudem jede Schmiertasche axial mittig in der Gleitfläche angeordnet ist, entsteht ein besonders symmetrischer Schmierfilm auf der Gleitfläche.

In Weiterbildung des erfindungsgemäßen Radialgleitlagers sind jeder Schmiertasche mehrere und insbesondere genau zwei Schmiernuten zugeordnet, die sich von den axial gegenüberliegenden Rändern der Gleitfläche zu den ihnen jeweils zugewandten Rändern der Schmiertasche erstrecken.

Vorteilhaft erstreckt sich jede Schmiernut in axialer Richtung. Dies ist die bei Radialgleitlagern kürzest mögliche Erstreckungsrichtung einer Schmiernut zwischen einem Rand der Gleitfläche und dem zugewandten Rand der zugeordneten Schmiertasche.

Bei Radiallagern ist es bevorzugt, dass jeder Schmierstoffzuführkanal in dem Lagerkörper derart angeordnet ist, dass er in einen mittleren Bereich der zugeordneten Schmiertasche mündet. Die mittige Mündung des zugeordneten Schmierstoffzuführkanals sorgt für ein gleichmäßiges Befüllen der Schmiertasche mit Schmierstoff.

Die Schmiertaschen sind zweckmäßiger Weise in einem Bereich der Gleitfläche angeordnet, der im Betrieb des Gleitlagers nur wenig belastet ist. Dadurch wird sichergestellt, dass das kontinuierliche Verteilen von Schmierstoff aus der Schmiertasche auf die Gleitfläche nicht durch entgegenwirkende Kräfte beeinträchtigt ist.

In einer alternativen Variante ist das Gleitlager als Axialgleitlager ausgebildet, wobei die Gleitfläche an einer axialen Stirnfläche des Lagerkörpers ausgebildet und/oder befestigt ist. An der Gleitfläche eines Axialgleitlagers kann sich ein bewegbares Maschinenteil in axialer Richtung abstützen.

In vorteilhafter Weise kann die Gleitfläche in Anpassung an rotierende Maschinenteile kreisring- oder kreisringsegmentförmig ausgebildet sein.

Gemäß einer Weiterbildung der Erfindung besitzt jede Schmiertasche eine längliche Form, die insbesondere gerade und/oder gekrümmte Abschnitte aufweist, und erstreckt sich in einer Radialrichtung des Axialgleitlagers. Diese Anordnung und Formgebung der Schmiertaschen ermöglicht ein gleichmäßiges Verteilen des Schmierstoffs auf der Gleitfläche. Konkret können die Schmiertaschen beispielsweise oval oder rechteckig ausgeformt sein.

Bei einer Ausgestaltung des erfindungsgemäßen Axialgleitlagers erstreckt sich jede Schmiertasche unter Bildung einer Randöffnung zu einem radial inneren Rand der Gleitfläche und erstreckt sich wenigstens eine, insbesondere genau eine zugeordnete Schmiernut von dem radial äußeren Rand der Gleitfläche zu dem radial äußeren Rand der Schmiertasche. Die relativ enge Schmiernut im radial äußeren Bereich der Gleitfläche verhindert ein infolge der Zentrifugalkraft übermäßiges Abfließen des Schmierstoffs radial auswärts.

Vorteilhaft ist jeder Schmierstoffzuführkanal in dem Lagerkörper derart angeordnet, dass er in einen radial inneren Bereich der zugeordneten Schmiertasche mündet. Der Schmierstoff wird bei dieser Anordnung durch die radial auswärts gerichtete Zentrifugalkraft in der Schmiertasche verteilt. Dabei können mehrere Schmierstoffzuführkanäle den Lagerkörper axial durchsetzen und zumindest im Wesentlichen senkrecht in die zugeordneten Schmiertaschen münden. Alternativ kann auch ein zentraler Schmierstoffzuführkanal den Lagerkörper axial durchsetzen und mit radial inneren Rändern der Schmiertaschen verbunden sein, insbesondere durch sich radial erstreckende Nuten oder dergleichen.

Weitere Merkmale und Vorteile der vorliegenden Erfindung werden anhand der nachfolgenden Beschreibung zweier Ausführungsformen des erfindungsgemäßen Gleitlagers unter Bezugnahme auf die beiliegende Zeichnung deutlich. Darin sind
- Figur 1: eine perspektivische Ansicht eines Radialgleitlagers gemäß einer ersten Ausführungsform der vorliegenden Erfindung; und
- Figur 2: eine Draufsicht eines Axialgleitlagers gemäß einer zweiten Ausführungsform der vorliegenden Erfindung.

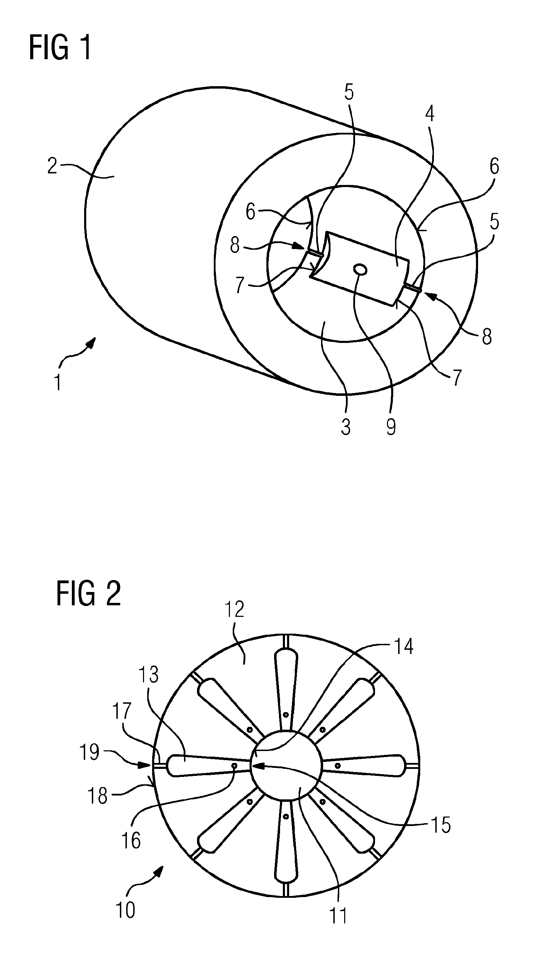

Die Figuren 1 und 2 zeigen zwei verschiedene Ausführungsformen des erfindungsgemäßen Gleitlagers 1 mit Lagerkörpern 2, an denen jeweils Gleitflächen 3 ausgebildet sind.

Das in Figur 1 dargestellte Gleitlager 1 ist als Radialgleitlager ausgebildet. Es umfasst einen ringförmig ausgebildeten Lagerkörper 2, an dessen radial innerer Umfangsfläche eine Gleitfläche 3 ausgebildet ist. In der Gleitfläche 3 ist eine rechteckige Schmiertasche 4 axial mittig derart angeordnet, dass sich ihre Längsrichtung in axialer Richtung erstreckt.

Der Schmiertasche 4 sind zwei Schmiernuten 5 zugeordnet, die sich von axial gegenüberliegenden Rändern 6 der Gleitfläche 3 zu den ihnen jeweils zugewandten Rändern 7 der Schmiertasche 4 erstrecken. Dabei mündet jede Schmiernut 5 mittig in die zugeordnete Schmiertasche 4 und erstreckt sich in axialer Richtung. Die Schmiernut 5 weist eine Tiefe von weniger als 20% der maximalen Tiefe und eine Breite von weniger als 20% der maximalen Breite der zugeordneten Schmiertasche 4 auf. Am Rand 6 der Gleitfläche 3 bilden die Schmiernuten 5 jeweils eine Randöffnung 8 mit einer Querschnittsfläche von wenigstens 0,2 mm². Ein Schmierstoffzuführkanal 9 durchsetzt den Lagerkörper 2 und mündet in einen mittleren Bereich der Schmiertasche 4.

Die Schmiertasche 4 ist in der Gleitfläche 3 entfernt von einem Bereich angeordnet, der im Betrieb des Gleitlagers 1 in hohem Maße mit Kraft beaufschlagt ist. In dieser Ausführungsform des Gleitlagers 1 ist derjenige Bereich der Gleitfläche 3 in hohem Maße mit Kraft beaufschlagt, auf dem die Welle (nicht dargestellt) mit ihrer Gewichtskraft aufliegt.

Im Betrieb des Radialgleitlagers wird der Schmiertasche 4 durch den Schmierstoffzuführkanal 9 Schmierstoff zugeführt. Der Schmierstoff gelangt durch die beiden Schmiernuten 5 zu den gegenüberliegenden Rändern 6 der Gleitfläche 3, wo er das Gleitlager 1 durch die Randöffnungen 8 verlässt, gesammelt und gefiltert wird und dem Schmierstoffzuführkanal 9 zugeleitet wird. Die in dem Gleitlager 1 rotierende Welle verteilt den Schmierstoff aus der Schmiertasche 4 und den Schmiernuten 5 auf der gesamten als Gleitfläche 3 ausgeformten inneren Umfangsfläche des Lagerkörpers 2. Durch die Reibung der Welle an der Gleitfläche 3 entstehender Materialabtrag sammelt sich in der Schmiertasche 4 und verlässt das Gleitlager 1 in axialer Richtung durch die Schmiernuten 5 und die Randöffnungen 8.

Die Figur 2 zeigt ein als Axialgleitlager ausgebildetes Gleitlager 10 gemäß der vorliegenden Erfindung mit einem Lagerkörper 11, an dessen axialer Stirnfläche eine Gleitfläche 12 in Anpassung an ein rotierendes Maschinenteil kreisringförmig ausgebildet ist. Alternativ kann die Gleitfläche 12 auch als Ringscheibe ausgebildet sein, die an dem Lagerkörper 11 befestigt ist. In der Gleitfläche 12 sind längliche Schmiertaschen 13 angeordnet, die sich ausgehend von einem radial inneren Rand 14 der Gleitfläche 14 radial auswärts erstrecken, wobei sie zum radial inneren Rand 14 jeweils eine Randöffnung 15 bilden. Jeder Schmiertasche 13 ist ein Schmierstoffzuführkanal 16 zugeordnet, der den Lagerkörper 11 durchsetzt und in einen radial inneren Bereich der Schmiertasche 13 mündet. Ebenfalls möglich ist ein zentraler Schmierstoffzuführkanal, der mit den Schmiertaschen durch sich radial erstreckende Nuten oder dergleichen verbunden ist, die in die Schmiertaschen an deren radial inneren Rändern münden. Ferner ist jeder Schmiertasche 13 eine Schmiernut 17 zugeordnet, die sich von einem radial äußeren Rand 18 der Gleitfläche 12 in radialer Richtung einwärts zu einem kreisförmig abgerundeten benachbarten Rand 19 der zugeordneten Schmiertasche 13 erstreckt. Die Schmiernuten 17 weisen eine Tiefe und eine Breite auf, die jeweils weniger als 20% der maximalen Tiefe bzw. Breite der zugeordneten Schmiertasche 13 beträgt, und bilden am radial äußeren Rand 18 der Gleitfläche 12 eine Randöffnung 20, die eine Querschnittsfläche von wenigstens 0,2 mm² aufweist.

Im Betrieb des Axialgleitlagers 10 wird den Schmiertaschen 13 durch die Schmierstoffzuführkanäle 15 Schmierstoff zugeführt. Der zugeführte Schmierstoff verteilt sich durch ein auf der Gleitfläche 12 aufstehendes zylinderförmiges Maschinenteil (nicht dargestellt) aufgrund der Zentrifugalkraft in den Schmiertaschen 13 und den diesen zugeordneten Schmiernuten 17 von innen nach außen, bevor er das Axialgleitlager 10 durch die Randöffnungen 20 verlässt, gesammelt und gefiltert wird und den Schmiertaschen 13 durch den Schmierstoffzuführkanal 15 erneut zugeführt wird. Materialabtrag, der infolge der Rotationsbewegung des Maschinenteils auf der Gleitfläche 12 entsteht, sammelt sich in den Schmiertaschen 13 und gelangt durch die Schmiernuten 17 und die Randöffnungen 20 aus dem Gleitlager 10 nach außen.

Vorteile erfindungsgemäßer Gleitlager 1, 10 liegen darin, dass sich der Schmierstoff dank der Schmiernuten 5, 17 gut über die gesamte Breite der Gleitflächen 3, 12 verteilen kann und reibungsbedingter Materialabtrag die Gleitflächen 3, 12 durch die Randöffnungen 8, 20 verlassen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleitlager (1;10) mit einem Lagerkörper (2;11), an dem eine Gleitfläche (3;12) ausgebildet ist, in der wenigstens eine Schmiertasche (4;13) zum Verteilen von Schmierstoff auf der Gleitfläche (3;12) vorgesehen ist, wobei insbesondere jeder Schmiertasche (4;13) ein Schmierstoffzuführkanal (9;16) zugeordnet ist, der den Lagerkörper (2;11) durchsetzt und dazu ausgebildet ist, der Schmiertasche (4;13) Schmierstoff zuzuführen, **dadurch gekennzeichnet, dass** der wenigstens einen Schmiertasche (4;13) wenigstens eine Schmiernut (5;17) zugeordnet ist, die in der Gleitfläche (3;12) ausgebildet ist und sich von einem Rand (6;18) der Gleitfläche (3;12) bis zu der zugeordneten Schmiertasche (4;13) erstreckt.

2. Gleitlager nach Anspruch 1, **dadurch gekennzeichnet, dass** die wenigstens eine Schmiernut (5;17) eine Tiefe von weniger als 50%, insbesondere von weniger als 30% und bevorzugt von weniger als 20% der maximalen Tiefe der zugeordneten Schmiertasche (4;13) aufweist.

3. Gleitlager nach einem der vorhergehenden Ansprüche, **dadurch gekennzeichnet, dass** die wenigstens eine Schmiernut (5;17) eine Breite von weniger als 50%, insbesondere von weniger als 30% und bevorzugt von weniger als 20% der maximalen Breite der zugeordneten Schmiertasche (4;13) aufweist.

4. Gleitlager nach einem der vorhergehenden Ansprüche, **dadurch gekennzeichnet, dass** die wenigstens eine Schmiernut (5;17) an dem Rand (6;18) der Gleitfläche (3;12) eine Randöffnung (8;10) bildet, die eine Querschnittsfläche von wenigstens 0,2 mm² und bevorzugt von wenigstens 0,25 mm² aufweist.

5. Gleitlager nach einem der vorhergehenden Ansprüche, **dadurch gekennzeichnet, dass** sich jede Schmiernut (5;17) von einem Rand (6;18) der Gleitfläche (3;12) zu einem dem Rand (6;18) der Gleitfläche (3;12) zugewandten Rand der zugeordneten Schmiertasche (4;13) erstreckt.

6. Gleitlager nach einem der vorhergehenden Ansprüche, **dadurch gekennzeichnet, dass** sich jede Schmiernut (5;17) entlang einer kürzesten Verbindung von einem Rand (6;18) der Gleitfläche (3;12) zu einem dem Rand (6;18) der Gleitfläche (3;12) zugewandten Rand (7;19) der zugeordneten Schmiertasche (4;13) erstreckt.

7. Gleitlager nach einem der vorhergehenden Ansprüche, **dadurch gekennzeichnet, dass** jede Schmiernut (5;17) mittig in die zugeordnete Schmiertasche (4;13) mündet.

8. Gleitlager nach einem der vorhergehenden Ansprüche, **dadurch gekennzeichnet, dass** das Gleitlager (1) als Radialgleitlager ausgebildet ist, wobei der Lagerkörper (2) ring- oder ringsegmentförmig ausgebildet ist und die Gleitfläche (3) an einer radial inneren und/oder einer radial äußeren Umfangsfläche des Lagerkörpers (2) ausgebildet ist.

9. Gleitlager nach Anspruch 8, **dadurch gekennzeichnet, dass** jede Schmiertasche (4) eine längliche, insbesondere rechteckige Form besitzt, wobei sich die Längsrichtung in der Axialrichtung erstreckt.

10. Gleitlager nach einem der Ansprüche 8 oder 9, **dadurch gekennzeichnet, dass** jede Schmiertasche (4) axial mittig in der Gleitfläche (3) angeordnet ist.

11. Gleitlager nach einem der Ansprüche 8 bis 10, **dadurch gekennzeichnet, dass** jeder Schmiertasche (4) mehrere und insbesondere genau zwei Schmiernuten (5) zugeordnet sind, die sich von den axial gegenüberliegenden Rändern (6) der Gleitfläche (3) zu den ihnen jeweils zugewandten Rändern der Schmiertasche (4) erstrecken.

12. Gleitlager nach einem der Ansprüche 8 bis 11, **dadurch gekennzeichnet, dass** sich jede Schmiernut (5) in axialer Richtung erstreckt.

13. Gleitlager nach einem der Ansprüche 8 bis 12, **dadurch gekennzeichnet, dass** jeder Schmierstoffzuführkanal (9) in dem Lagerkörper (2) derart angeordnet ist, dass er in einen mittleren Bereich der zugeordneten Schmiertasche (4) mündet.

14. Gleitlager nach einem der Ansprüche 8 bis 13, **dadurch gekennzeichnet, dass** jede Schmiertasche (4) in einem Bereich der Gleitfläche (3) angeordnet ist, der im Betrieb des Gleitlagers (1) nur wenig belastet ist.

15. Gleitlager nach einem der Ansprüche 1 bis 7, **dadurch gekennzeichnet, dass** das Gleitlager (10) als Axialgleitlager ausgebildet ist, wobei die Gleitfläche (12) an einer axialen Stirnfläche des Lagerkörpers (11) ausgebildet und/oder befestigt ist.

16. Gleitlager nach Anspruch 15, **dadurch gekennzeichnet, dass** die Gleitfläche (12) kreisring- oder kreisringsegmentförmig ausgebildet ist.

17. Gleitlager nach einem der Ansprüche 15 oder 16, **dadurch gekennzeichnet, dass** jede Schmiertasche (13) eine längliche Form besitzt, die insbesondere gerade und/oder gekrümmte Abschnitte aufweist, und sich in einer Radialrichtung des Gleitlagers (10) erstreckt.

18. Gleitlager nach einem der Ansprüche 15 bis 17, **dadurch gekennzeichnet, dass** sich jede Schmiertasche (13) unter Bildung einer Randöffnung (15) zu einem radial inneren Rand (14) der Gleitfläche (12) erstreckt und sich wenigstens eine, insbesondere genau eine zugeordnete Schmiernut (17) von dem radial äußeren Rand (18) der Gleitfläche (12) zu dem radial äußeren Rand (19) der Schmiertasche (13) erstreckt.

19. Gleitlager nach einem der Ansprüche 15 bis 18, **dadurch gekennzeichnet, dass** jeder Schmierstoffzuführkanal (16) in dem Lagerkörper (11) derart angeordnet ist, dass er in einen radial inneren Bereich der zugeordneten Schmiertasche (13) mündet.
